# EUROPÄISCHE PATENTSCHRIFT

(11) **EP 2 415 134 B1**
(45) Veröffentlichungstag und Bekanntmachung des Hinweises auf die Patenterteilung: **17.08.2016**
(21) Anmeldenummer: 10714222.6
(22) Anmeldetag: 29.03.2010
(51) Int. Cl.: H02B 13/045

(54) **KAPSELUNGSGEHÄUSEREDUZIERSTÜCK**
ENCAPSULATION HOUSING REDUCING PIECE
RACCORD RÉDUCTEUR POUR BOÎTIER D'ENCAPSULATION

(30) Priorität: 01.04.2009 DE 102009015539
(43) Veröffentlichungstag der Anmeldung: 08.02.2012
(73) Patentinhaber: Siemens Aktiengesellschaft, 80333 München (DE)
(72) Erfinder: KLEINSCHMIDT, Andreas, 16515 Oranienburg (DE); BEUTEL, Stefan, 10555 Berlin (DE)
(86) Internationale Anmeldenummer: PCT/EP2010/054107
(87) Internationale Veröffentlichungsnummer: WO 2010/112462

(56) Entgegenhaltungen:
- DE-A1-102006 001 237
- DE-B3- 10 254 385
- FR-A1- 2 777 128

## Beschreibung

Die Erfindung bezieht sich auf ein Kapselungsgehäusereduzierstück mit einem ersten Flansch und einem gegenüber dem ersten Flansch querschnittreduzierten zweiten Flansch, zwischen welchen sich ein Kapselungsgehäusemantel erstreckt, wobei in dem Kapselungsgehäusemantel mehrere ebene Zonen angeordnet sind, zwischen welchen Mantelflächenabschnitte rotationssymmetrisch angeordnet sind.

Ein Kapselungsgehäusereduzierstück ist beispielsweise aus dem deutschen Gebrauchsmuster DE 298 06 652 U1 bekannt. Dort ist ein gekapselter dreiphasiger Leistungsschalter beschrieben, an welchen sich Kapselungsbausteine anschließen. Einer der Kapselungsbausteine ist als Kapselungsgehäusereduzierstück ausgeführt, welches einen ersten Flansch und einen gegenüber dem ersten Flansch querschnittsreduzierten zweiten Flansch aufweist. Zwischen erstem und zweitem Flansch ist ein Kapselungsgehäusemantel angeordnet. Die bekannten Kapselungsgehäusereduzierstücke werden vorzugsweise zur Aufnahme von Stromwandlern eingesetzt. Dazu sind verschiedenartige Kombinationen verschiedenartig geformter Kapselungsgehäusereduzierstücke vorgesehen. Um Gestehungskosten zu reduzieren ist es vorteilhaft, eine große Anzahl von einheitlichen Bauteilen zu verwenden.

Der Offenlegungsschrift DE 10 2006 001 037 A1 ist eine Schaltanlage mit einem metallenen Kapselungsgehäuse entnehmbar. Das Kapselungsgehäuse setzt sich aus zwei Teilen, einem Grundkörper in Form eines Topfes sowie einem Kopfteil zusammen. Kopfteil und Topf weisen jeweils einen Flansch auf, über den die beiden Teile mittels einer Verschraubung gasdicht verbunden sind.

Aus der Patentschrift DE 102 54 385 B3 geht ein Gehäuse für eine elektrische Anlage hervor, welches einen ersten sowie einen zweiten Flansch aufweist, wobei der zweite Flansch gegenüber dem ersten Flansch querschnittsreduziert ist. Zwischen den beiden Flanschen erstreckt sich ein Kapselungsgehäusemantel, in welchem mehrere ebene Zonen angeordnet sind. Die ebenen Zonen sind durch außenmantelseitig aufgebrachte Angüsse ausgebildet.

Im Zuge einer zunehmenden Miniaturisierung ist eine Massereduzierung von Kapselungsgehäusen wünschenswert. Darüber hinaus soll trotz Miniaturisierung die Nutzbarkeit des Kapselungsgehäusereduzierstückes jedoch möglichst nicht beeinträchtigt werden.

Daher ist es Aufgabe der Erfindung, den Materialbedarf für ein Kapselungsgehäusereduzierstück zu reduzieren, wobei eine universelle Nutzbarkeit weiterhin erhalten bleiben soll.

Erfindungsgemäß wird dies bei einem Kapselungsgehäusereduzierstück der eingangs genannten Art dadurch gelöst, dass die Zonen durch Abplattungen eines Kreiszylindermantels gebildet sind.

Kapselungsgehäusereduzierstücke sind beispielsweise an gasisolierten Schaltanlagen eingesetzt. Gasisolierte Schaltanlagen weisen fluiddichte Kapselungsgehäuse auf, in deren Inneren Aktivleiter angeordnet sind. Aktivleiter dienen einem Leiten eines elektrischen Stromes. Die Aktivleiter sind dazu beabstandet zu den Kapselungsgehäusen im Innern derselben elektrisch isoliert positioniert. Um eine elektrische Isolation zwischen den Aktivleitern und den Kapselungsgehäusen zu gewährleisten, ist das Innere mit einem elektrisch isolierenden Fluid befüllt. Vorzugsweise ist dieses Fluid ein unter erhöhtem Druck stehendes Isoliergas wie beispielsweise Schwefelhexafluorid. Ein Kapselungsgehäusereduzierstück ist ein fluiddichtes Kapselungsgehäuse.

Kapselungsgehäuse umgeben die Aktivleiter fluiddicht, so dass das elektrisch isolierende Fluid im Innern des Kapselungsgehäuses gehalten werden kann. Gegebenenfalls sind zu einem Hindurchführen von Aktivleitern durch eine Wandung des Kapselungsgehäuses elektrisch isolierende Durchführungen einzusetzen. Beispielsweise können derartige Durchführungen im Bereich von Flanschen des Kapselungsgehäusereduzierstückes angeordnet sein.

Zwischen erstem und zweitem Flansch erstreckt sich der Kapselungsgehäusemantel. Dabei ist der Kapselungsgehäusemantel derart ausgelegt, dass eine winkelstarre Verbindung zwischen den beiden Flanschen über den Kapselungsgehäusemantel gegeben ist. Vorzugsweise sollte die Ausrichtung der Flansche derart gewählt sein, dass Flanschflächen der beiden Flansche annähernd parallel zueinander liegen. Vorteilhafterweise sind als Flansche Ringflansche einzusetzen, welche koaxial zueinander liegen. Vorzugsweise liegen die Flansche koaxial zu einer Längsachse des Kapselungsgehäusereduzierstückes. Zwischen dem Kapselungsgehäusemantel und den Flanschen ist jeweils ein fluiddichter Übergang gebildet. Im Innern des Kapselungsgehäusereduzierstückes ist ein Volumen begrenzt, welches der Ausbildung eines Fluidraumes dient.

Durch eine Ausgestaltung des Kapselungsgehäusemantels mit mehreren Zonen die eben ausgeformt sind, wobei diese Zonen über zueinander koaxial angeordnete rotationssymmetrische Mantelflächenabschnitten untereinander verbunden sind, ergibt sich im Innern des Aufnahmeraumes des Kapselungsgehäusereduzierstückes zumindest abschnittsweise ein Volumen mit einer dreieckigen Querschnittsfläche, wobei die Ecken der dreieckigen Querschnittsfläche abgerundet sind. So ist das Innere des Kapselungsgehäusereduzierstückes zumindest teilweise als zylindrischer Aufnahmeraum ausgeprägt, dessen Stirnseiten dreieckige Querschnitte aufweisen, deren Ecken von Abrundungen gebrochen sind. Die ebenen Zonen und die rotationssymmetrischen Mantelflächenabschnitte sind fluiddicht miteinander verbunden und bilden gemeinsam zumindest einen umlaufenden Abschnitt des Kapselungsgehäusemantels des Kapselungsgehäusereduzierstückes. Der Kapselungsgehäusemantel verbindet die beiden Flansche fluiddicht miteinander, so das zwischen Flanschöffnungen der Flansche ein abgeschlossener Kanal gegeben ist.

Insbesondere bei einem Einsatz derartiger Kapselungsgehäusereduzierstücke in mehrphasigen gasisolierten Schaltanlagen, die in Kapselungsgehäusen jeweils Aktivleiter mehrere Phasen eines Elektroenergieübertragungssystemes aufnehmen, können diese Aktivleiter zum einen elektrisch isoliert zueinander angeordnet sein, zum anderen können diese insbesondere bei dem Vorhandensein von drei Phasen in einem Dreieck zueinander angeordnet sein. Dadurch ergibt sich ein ausreichend dimensionierter Aufnahmeraum im Innern des Kapselungsgehäusereduzierstückes, welcher ein ausreichendes Volumen zur Aufnahme von Aktivleitern der drei Phasen zur Verfügung stellt und aufgrund der ebenen Zonen gegenüber herkömmlichen kreiszylinderförmigen Aufnahmeräumen ein reduziertes Innenvolumen aufweist. Damit wird das zum Befüllen des Innern des Kapselungsgehäusereduzierstückes notwendige Fluid, wie beispielsweise Schwefelhexafluoridgas oder Stickstoffgas oder andere Gasgemische, reduziert. Gegenüber einem herkömmlichen kreisförmigen Querschnitt des Kapselungsgehäusemantels sind so zwar hinsichtlich einer Druckfestigkeit Einschränkungen zu erwarten, jedoch können bei einer geeigneten Materialwahl zur Ausformung des Kapselungsgehäusereduzierstückes ausreichende Druckfestigkeiten erzielt werden. So ist es beispielsweise möglich, das Kapselungsgehäusereduzierstück als Gusskörper auszuformen, wobei als Gussmaterial Metalle wie Eisen- oder Nichteisenmetalle, insbesondere Aluminiumlegierungen zum Einsatz gelangen können. Zum einen wird durch den Einsatz von Metallen zur Ausbildung des Kapselungsgehäusereduzierstückes ein mechanisch stabiler Körper zur Verfügung gestellt. Zum anderen besteht die Möglichkeit, das Kapselungsgehäusereduzierstück in einfacher Weise mit Erdpotential zu beaufschlagen. So ist es beispielsweise möglich, gasisolierte Schaltanlagen auszubilden, deren äußere Oberflächen Erdpotential führen und so ein zuverlässiger Berührungsschutz der im Innern der Kapselungsgehäuse befindlichen Aktivleiter gewährleistet ist.

Vorteilhaft kann weiter vorgesehen sein, dass zumindestens eine, insbesondere alle ebenen Zonen über eine Biegekante in einen Kreisabschnitt übergehen, welcher mit dem ersten Flansch verbunden ist.

Über die Kreisabschnitte kann eine radiale Erweiterung des Kapselungsgehäusereduzierstückes erfolgen. Die Kreisabschnitte gewährleisten einen fluiddichten Übergang zwischen den Zonen zu dem ersten Flansch, welcher vorzugsweise ein Kreisflansch ist. Der Kreisbogen des Kreisabschnittes stößt an den ersten Flansch. Flächennormalen einer Zone und eines angrenzenden Kreisabschnittes sollten vorzugsweise im Wesentlichen lotrecht zueinander stehen. Die Biegekante verläuft parallel zu einer Sehne des Kreisabschnittes. Die Enden des Kreisbogens des Kreisabschnittes stoßen an Übergänge der rotationssymmetrischen Mantelflächenabschnitte, die an die benachbarte ebene Zone stoßen. Übergänge zwischen erstem Flansch und rotationssymmetrischen Flächenabschnitten sind als Abwinkelungen ausgeführt, wobei eine Bahn der Abwinkelungen in Übergangs- bzw. Stoßbereichen koaxial zu dem Verlauf der rotationssymmetrischen Mantelflächenabschnitte sowie zu dem ersten Flansch verläuft.

Weiterhin kann vorteilhaft vorgesehen sein, dass die Zonen symmetrisch im Umlauf der Mantelflächenabschnitte verteilt sind.

Durch eine symmetrische Verteilung der Zonen in dem Kapselungsgehäusemantel entsteht im Abschnitt des Kapselungsgehäusereduzierstückes ein gleichseitig dreieckiger Querschnitt mit entsprechend abgerundet gebrochenen Ecken. Damit wird insbesondere bei einer Kombination des Kapselungsgehäusereduzierstückes, beispielsweise mit Kapselungsgehäusen, die im Wesentlichen kreisförmige Querschnitte aufweisen und somit zumindest im Wesentlichen kreiszylindrische Aufnahmeräume in ihrem Inneren zur Verfügung stellen, eine einfache Kombinationsmöglichkeit gegeben. Damit ist ein symmetrischer Aufbau des Kapselungsgehäusereduzierstückes ermöglicht und dieses kann sich in die äußeren Konturen herkömmlicher kreisförmig geformter Kapselungsgehäuseabschnitte einfügen. Die rotationssymmetrischen Mantelflächenabschnitte sollten vorzugsweise auf ein und derselben Bahn liegen, so dass der Aufnahmeraum eine zumindest im Wesentlichen symmetrische Gestalt aufweist. Vorteilhafterweise sollte vorgesehen sein, dass das zylindrische Volumen mit dem dreieckigen Querschnitt mit abgerundeten Ecken an seinem einen Ende querschnittsreduziert in Richtung des zweiten Flansches in eine rotationssymmetrische Mantelfläche übergeht, die an den zweiten Flansch stößt. Mit dem anderen Ende sollte das Volumen mit dem dreieckigen Querschnitt mit abgerundeten Ecken in Richtung des ersten Flansches sich erweiternd in den ersten Flansch übergehen. In einer Projektion in Richtung der Längsachse überragt der erste Flansch mit seinem Querschnitt den dreieckförmig zylindrischen Abschnitt des Kapselungsgehäusemantels, wohingegen der zweite Flansch in derselben Projektion von dem dreieckförmig zylindrischen Abschnitt des Kapselungsgehäusemantels überragt ist.

Die Zonen können beispielsweise dadurch ausgebildet sein, dass ein im Wesentlichen kreiszylinderförmiger Mantel im Bereich des Mantels entsprechende Abplattungen erhält, so dass die Zonen beispielsweise im Querschnitt gesehen Sehnen in einem kreisförmigen Querschnitt darstellen und so eine abgeplattete Zone definiert ist.

Durch ein Abplatten eines kreiszylinderförmigen Mantels, der ursprünglich Teil eines Kreiszylinders war, wird zum einen der im Innern zur Verfügung stehende Aufnahmeraum in seinem Volumen reduziert. Damit wird die nötige Fluidmenge zum Befüllen des Inneren des Kapselungsgehäusereduzierstückes gegenüber herkömmlichen Kapselungsgehäusen mit kreisförmigem Querschnitt reduziert. Weiterhin ist eine Möglichkeit gegeben beispielsweise Wandlerkerne symmetrisch um eine Längsachse des Kapselungsgehäusereduzierstückes herum zu verteilen. Insbesondere bei im Wesentlichen hohlzylindrischen Wandlerkernen, welche von Aktivleitern eines mehrphasigen Elektroenergieübertragungsnetzes durchsetzt sind, kann so der entstehende Raum effektiv genutzt werden, da das Kapselungsgehäuse auf die Formgebung der Einbauten abgestimmt ist und Ecken günstig mit Einbauten befüllt werden können.

Weiterhin kann vorteilhaft vorgesehen sein, dass die Zonen als vertiefte Einprägungen in einen Kreiszylindermantelabschnitt eingeformt sind.

Bei einem Einprägen der Zonen in die Mantelflächenabschnitte ist die Möglichkeit gegeben, zwischen Mantelflächenabschnitte von diesen überragte ebene Flächen zu erzeugen, welche der Aufnahme von Anbauten und Einbauten dienen können. Damit bieten die Mantelflächenabschnitte einen Schutz der vertieften ebenen Zonen.

Weiterhin kann vorteilhaft vorgesehen sein, dass die Zonen durch Erhebungen an einen Kreiszylindermantelabschnitt angeformt sind.

Bei einem Herausheben der ebenen Zonen aus den Mantelflächenabschnitten werden diese von den ebenen Zonen überragt. Eine derartige Ausgestaltung ist in einfacher Weise auch an bestehenden Kapselungsgehäusereduzierstücken nachrüstbar, da auf die bestehenden Strukturen zusätzliche Aufbauten aufgebracht werden, um die ebenen Zonen auszuformen.

Eine weitere vorteilhafte Ausgestaltung kann vorsehen, dass in zumindest einer der Zonen eine Flanschöffnung angeordnet ist.

Eine Flanschöffnung gestattet es in das Innere des Kapselungsgehäusereduzierstückes einzugreifen, auch wenn der erste bzw. der zweite Flansch mit weiteren Baugruppen verflanscht sind. So ist es beispielsweise möglich, über eine Flanschöffnung in einer ebenen Zone Montagearbeiten im Innern des Kapselungsgehäusereduzierstückes vorzunehmen. Vorteilhafterweise kann in jeder der Zonen eine Flanschöffnung angeordnet sein. Die Flanschöffnung kann dabei vorzugsweise einen kreisrunden Öffnungsquerschnitt aufweisen, welcher von einem Kreisringflansch umgeben ist. An den Kreisringflansch sind dann weitere Baugruppen anflanschbar, so dass die Flanschöffnung bedarfsweise komplettiert bzw. fluiddicht verschlossen werden kann.

Beispielsweise kann eine Flanschöffnung durch einen Blinddeckel fluiddicht verschlossen werden.

Vorteilhafterweise kann vorgesehen sein, dass die Flanschöffnung von einer Überdrucksicherungseinrichtung verschlossen ist.

Das Innere des Kapselungsgehäusereduzierstückes ist mit einem unter erhöhtem Druck stehenden Fluid gefüllt. Ein derartiges Fluid ist beispielsweise ein Gas oder eine Flüssigkeit. Bei einem unter Druck setzen des Fluides im Inneren des Kapselungsgehäusereduzierstückes stellt sich im Regelfall gegenüber einem das Kapselungsgehäusereduzierstück umgebenden Medium eine Druckdifferenz ein, wobei der Druck des das Kapselungsgehäuse umgebenden Mediums im Regelfalle geringer ist als der Druck im Innern des Kapselungsgehäusereduzierstückes. Durch unvorhergesehene äußere Einwirkungen oder Störungen kann es zu einem Überdruck im Innern des Kapselungsgehäusereduzierstückes kommen, so dass ein Zerstören des Kapselungsgehäusereduzierstückes oder eine Gefährdung von Menschen auftreten kann. Um in diesen Fällen größere Schäden zu vermeiden, kann eine Überdrucksicherungseinrichtung auf eine Flanschöffnung in einer Zone aufgesetzt werden und so die Flanschöffnung verschlossen werden. Bei einem zu großen Druck im Inneren des Kapselungsgehäusereduzierstückes kann über die Überdrucksicherungseinrichtung bei Erreichen eines Grenzdruckes ein Ablassen von Fluid aus dem Inneren in die Umgebung des Kapselungsgehäusereduzierstückes erfolgen.

Eine weitere vorteilhafte Ausgestaltung kann vorsehen, dass die Flanschöffnung von einer Messleitungsdurchführung verschlossen ist.

Insbesondere bei einer Nutzung des Kapselungsgehäusereduzierstückes zur Aufnahme einer Messeinrichtung mit entsprechenden Messaufnehmern wie Spulen, Kondensatoren, Lichtwellenleitern usw. ist es vorteilhaft, Informationen, welche von den Messaufnehmern gewonnen wurden, durch das Kapselungsgehäuse nach außen zu übertragen. Eine Übertragung sollte dabei möglichst fluiddicht durch das Kapselungsgehäuse hindurch erfolgen. Eine Messleitungsdurchführung gestattet dies. Die Messleitungsdurchführung kann beispielsweise über einer Flanschöffnung in einer der Zonen angeflanscht werden.

Weiterhin kann vorteilhaft vorgesehen sein, dass die Flanschöffnung mit einem Filterdeckel verschlossen ist.

Das Innere des Kapselungsgehäuses ist mit einem elektrisch isolierenden Fluid befüllt. Bei einem Auftreten von Lichtbögen o. ä. kann es zu Zersetzungen des elektrisch isolierenden Fluids kommen, wobei Zersetzungsprodukte entstehen, welche die elektrische Isolationsfähigkeit des Fluids nachteilig beeinflussen können. Durch ein Verschließen der Flanschöffnung mit einem Filterdeckel ist eine Möglichkeit gegeben, derartige Zersetzungsprodukte aus dem Fluid herauszufiltern. Dazu ist der Filterdeckel fluiddicht auf die Flanschöffnung aufgesetzt und weist an einer dem Inneren des Kapselungsgehäuses zugänglichen Wandung einen Aufnahmebereich zur Aufnahme eines Filtermaterials auf.

Durch eine Verbindung des Filtermaterials mit dem Filterdeckel ist die Möglichkeit gegeben, das Filtermaterial in einfacher Weise durch ein Öffnen der Flanschöffnung nach einem mehrjährigen Betrieb zu ersetzen und nach erfolgter Ersetzung das Kapselungsgehäuse wiederum fluiddicht zu verschließen.

In den ebenen Zonen eines Kapselungsgehäusereduzierstückes befindliche Flanschöffnungen können je nach Notwendigkeit verschiedenartig verschlossen werden.

Weiterhin kann vorteilhaft vorgesehen sein, dass zwei gleichartige Kapselungsgehäusereduzierstücke mit ihren ersten Flanschen miteinander verflanscht sind und gemeinsam einen Fluidraum begrenzen.

Durch ein Verflanschen von gleichartigen Kapselungsgehäusereduzierstücken ist die Möglichkeit gegeben, einen Fluidraum auszubilden, welcher endseitig über die jeweiligen zweiten Flansche der beiden Kapselungsgehäusereduzierstücke verfügt und über diese mit weiteren Kapselungsgehäusen verbindbar ist. Damit wird durch die beiden Kapselungsgehäusereduzierstücke ein vergrößerter Aufnahmeraum/Fluidraum zur Verfügung gestellt. Dabei sollte vorteilhaft vorgesehen sein, dass die ebenen Zonen bezüglich der Längsachse der Kapselungsgehäusereduzierstücke zueinander fluchtend ausgerichtet sind.

Eine weitere vorteilhafte Ausgestaltung kann vorsehen, dass der erste Flansch eines Kapselungsgehäusereduzierstückes von einem Deckel verschlossen ist, welcher an seinem Umfang mehrere den ersten Flansch radial überragende Anformungen aufweist, an welchen das Kapselungsgehäusereduzierstück abgestützt ist.

Neben einer Verwendung eines Kapselungsgehäusereduzierstückes zur Aufnahme eines Stromwandlers kann ein derartiges Kapselungsgehäusereduzierstück auch dazu dienen, eine Schnittstelle für Kabeldurchführungen in das Innere einer gasisolierten Schaltanlage auszubilden. Durch ein Verschließen des ersten Flansches mittels eines Deckels ist die Möglichkeit gegeben, in den Deckel Öffnungen einzubringen, welche der Aufnahme einer Kabeldurchführung beispielsweise in Form einer Kabelsteckverbindung dienen. Eine derartige Kabelsteckverbindung weist eine Kabelbuchse und einen Kabelstecker auf, wobei die Kabelbuchse winkelstarr fluiddicht mit dem Deckel verbunden ist und zumindest einen elektrisch isolierenden Abschnitt einer fluiddichten Wandung eines durch das Kapselungsgehäusereduzierstück begrenzten Fluidraumes aufweist. Vorteilhaft ist dabei, wenn der Deckel mit derselben Anzahl von Öffnungen und entsprechenden Kabelbuchsen versehen ist, wie das Kapselungsgehäusereduzierstück ebene Zonen aufweist. Durch die den ersten Flansch überragende Anformungen besteht die Möglichkeit, an diesen Anformungen Halterungen zur Positionierung des Kapselungsgehäusereduzierstückes zu befestigen, so dass das Kapselungsgehäusereduzierstück in seiner Lage stabilisiert ist.

Dabei kann vorgesehen sein, dass der Deckel von Kabeldurchführungen durchsetzt ist.

Kabeldurchführungen sind notwendig, um elektrische Kabel mit ihren elektrischen Leitern in das Innere einer gasisolierten Schaltanlage einzuführen. Im Innern der gasisolierten Schaltanlage ist eine elektrische Isolation der Aktivleiter durch das dort befindliche elektrisch isolierende Fluid gewährleistet. Außerhalb der gasisolierten Schaltanlage und damit außerhalb des Kapselungsgehäusereduzierstückes wird die elektrische Isolation der Aktivleiter eines Elektroenergieübertragungsnetzes durch eine Isolationsschicht des Kabels gewährleistet. Kabeldurchführungen dienen zum einen der Einführung eines Kabels in das Innere des Kapselungsgehäusereduzierstückes. Zum anderen dienen die Kabeldurchführungen einer Steuerung eines elektrischen Feldes um die im Bereich der Kabeldurchführungen befindlichen Kabelenden. Eine Kabeldurchführung weist dabei beispielsweise eine Kabelbuchse und einen Kabelstecker auf, wobei der Kabelstecker in die Kabelbuchse eingeführt ist und dort eine elektrische Schnittstelle des elektrischen Leiters des Kabels zu einem Aktivleiter im Innern des Kapselungsgehäusereduzierstückes gegeben ist. Die Kabelbuchse ist dabei Teil einer fluiddichten Wandung des Kapselungsgehäusereduzierstückes und verhindert ein Austreten von elektrisch isolierenden Fluid aus dem Kapselungsgehäusereduzierstück.

Im Folgenden wird ein Ausführungsbeispiel der Erfindung schematisch in einer Zeichnung gezeigt und nachfolgend näher beschrieben.

Dabei zeigt die
- Figur 1: eine perspektivische Ansicht eines Kapselungsgehäusereduzierstückes, die
- Figur 2: eine Draufsicht auf einen zweiten Flansch des Kapselungsgehäusereduzierstückes, die
- Figur 3: einen Schnitt durch einen Kapselungsgehäusemantel des Kapselungsgehäusereduzierstückes, die
- Figur 4: einen Schnitt durch eine Längsachse des Kapselungsgehäusereduzierstückes, die
- Figur 5: das Kapselungsgehäusereduzierstück mit einem Deckel auf einem ersten Flansch und die
- Figur 6: einen Schnitt durch das Kapselungsgehäuse mit Deckel.

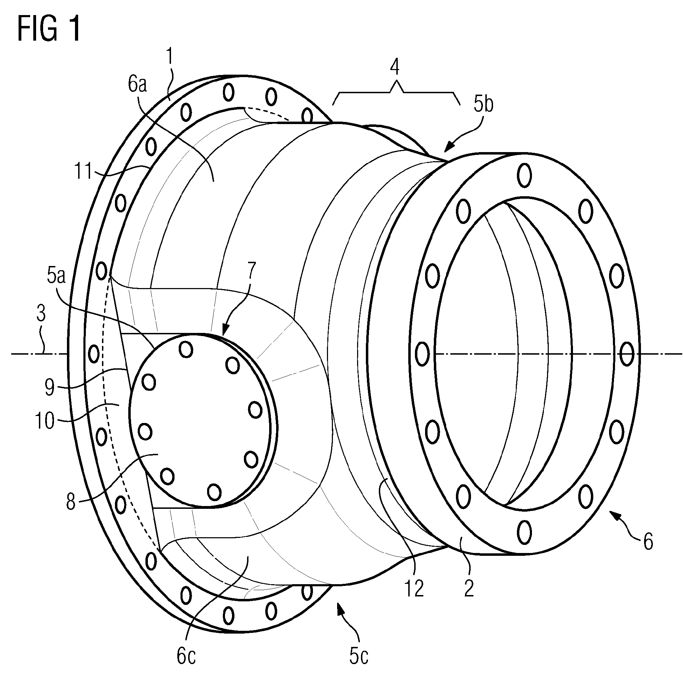

Die Figur 1 zeigt ein Kapselungsgehäusereduzierstück in einer perspektivischen Ansicht. Das Kapselungsgehäusereduzierstück weist einen ersten Flansch 1 sowie einen zweiten Flansch 2 auf. Der erste und der zweite Flansch 1, 2 sind jeweils als Ringflansche ausgebildet, welche mit ihren Flanschflächen annähernd parallel zueinander ausgerichtet sind. Die beiden Flansche 1, 2 liegen dabei koaxial zu einer Längsachse 3 des Kapselungsgehäusereduzierstückes. Zwischen den einander zugewandten Enden der beiden Flansche 1, 2 erstreckt sich ein Kapselungsgehäusemantel 4. Der Kapselungsgehäusemantel 4 schließt sich fluiddicht an den ersten bzw. an den zweiten Flansch 1, 2 an und bildet zwischen den beiden Flanschen 1, 2 um die Längsachse 3 umlaufend einen fluiddichten Kanal. Der Kapselungsgehäusemantel 4 weist dabei eine erste ebene Zone 5a auf. Neben der ersten ebenen Zone 5a sind eine zweite ebene Zone 5b sowie eine dritte ebene Zone 5c symmetrisch verteilt im Umlauf des Kapselungsgehäusemantels 4 um die Längsachse 3 angeordnet. Zwischen den drei ebenen Zonen 5a, 5b, 5c sind jeweils rotationssymmetrisch zueinander liegende Mantelflächenabschnitte 6a, 6b, 6c angeordnet. Die rotationssymmetrischen Mantelflächenabschnitte 6a, 6b, 6c sind jeweils koaxial zu der Längsachse 3 ausgerichtet, wobei die drei rotationssymmetrischen Mantelflächenabschnitte 6a, 6b, 6c auf ein und derselben Umlaufbahn liegen. Die rotationssymmetrischen Mantelflächenabschnitte 6a, 6b, 6c stoßen jeweils an die ebenen Zonen 5a, 5b, 5c und sind fluiddicht mit ihnen verbunden. Im Stoßbereich zwischen den ebenen Zonen 5a, 5b, 5c und den jeweils anliegenden Mantelflächenabschnitten 6a, 6b, 6c sind Übergangsbereiche gebildet, um eine abgerundete Oberflächenstruktur zu erhalten. Im Innern des Kapselungsgehäusereduzierstückes ist im Bereich der ebenen Zonen 5a, 5b, 5c sowie der rotationssymmetrischen Mantelflächenabschnitte 6a, 6b, 6c ein Aufnahmeraum/Fluidraum gebildet, welcher einen im Wesentlichen dreieckförmigen Querschnitt aufweist, wobei die Ecken des Dreieckes abgerundet sind. Die Ecken sind dabei durch die rotationssymmetrischen Mantelflächenabschnitte 6a, 6b, 6c gebrochen. Die Seiten der dreieckigen Grundfläche sind durch die ebenen Zonen 5a, 5b, 5c begrenzt. Aufgrund der gleichmäßigen Verteilung der ebenen Zonen 5a, 5b, 5c und der gleichartig umlaufenden Mantelflächenabschnitte 6a, 6b, 6c ist ein gleichseitiger dreieckiger Querschnitt gebildet. Damit ist zumindest ein Abschnitt des zwischen den beiden Flanschen 1, 2 gebildeten Aufnahmeraumes des Kapselungsgehäusereduzierstückes in Form eines zylindrischen Körpers mit im Wesentlichen dreieckiger Grundfläche und abgerundeten Ecken gegeben.

In den ebenen Zonen 5a, 5b, 5c sind jeweils Flanschöffnungen 7 vorgesehen. Die Flanschöffnungen 7 sind dabei in Form eines Kreises ausgestaltet, wobei diese Kreise jeweils von einem Flanschring umgeben sind. Über den die Flanschöffnungen 7 umgebenden Flanschring sind die Flanschöffnungen 7 fluiddicht verschließbar. In der Figur 1 ist ein fluiddichter Verschluss der Flanschöffnung 7 mit einem Blindflanschdeckel 8 erfolgt.

Die weiteren Flanschöffnungen 7 sind ebenfalls mit Blindflanschdeckeln verschlossen. Es kann jedoch auch vorgesehen sein, dass bedarfsweise verschiedene Flanschöffnungen 7 mit verschiedenen Elementen zu verschließen sind. Als verschiedene Elemente können neben Blindflanschdeckeln 8 auch Messleitungsdurchführungen, Überdrucksicherungseinrichtungen oder Filterdeckel usw. dienen.

Der Kapselungsgehäusemantel 4 geht an seinem dem ersten Flansch 1 zugewandten Ende fluiddicht in den ersten Flansch 1 über. Dazu ist vorgesehen, dass im Bereich der ebenen Zonen 5a, 5b, 5c eine Biegekante 9 angeordnet ist, über welche eine Verbindung zu dem Flansch 1 gegeben ist. Dabei sind die Flächennormalen der ebenen Zonen 5a, 5b, 5c bzw. die Flächennormalen der anstoßenden Fläche des ersten Flansches 1 im Wesentlichen senkrecht zueinander ausgerichtet. Dadurch ergibt sich bezüglich der Längsachse 3 eine radiale Erweiterung von den ebenen Zonen 5a, 5b, 5c auf den ersten Flansch 1. Im Bereich der ebenen Zonen 5a, 5b, 5c ist jeweils ein Kreisabschnitt 10 angeordnet, welcher über die jeweilige Biegekante 9 in eine ebene Zone 5a, 5b, 5c übergeht. Bogenenden des Kreisabschnittes 10 gehen in eine Kreisbahn über, welche eine gebogene Biegekante 11 definiert, über welche die rotationssymmetrischen Mantelflächenabschnitte 6a, 6b, 6c an den ersten Flansch 1 stoßen. Biegeradien der gebogenen Biegekanten 11 zwischen am erstem Flansch 1 und dem rotationssymmetrischen Mantelflächenabschnitten 6a, 6b, 6c sind jeweils koaxial zu der Längsachse 3 ausgerichtet.

An dem Ende des Kapselungsgehäusemantels, welches dem zweiten Flansch 2 zugewandt ist, ist vorgesehen, dass die ebenen Zonen 5a, 5b, 5c sowie die rotationssymmetrischen Mantelflächenabschnitte 6a, 6b, 6c in einen querschnittsreduzierten rotationssymmetrischen Abschnitt 12 übergehen, welcher eine Verbindung zu dem zweiten Flansch 2 darstellt. Der querschnittreduzierte rotationssymmetrische Abschnitt 12 ist fluiddicht sowohl mit den ebenen Zonen 5a, 5b, 5c sowie den rotationssymmetrischen Mantelflächenabschnitten 6a, 6b, 6c sowie dem zweiten Flansch 2 verbunden.

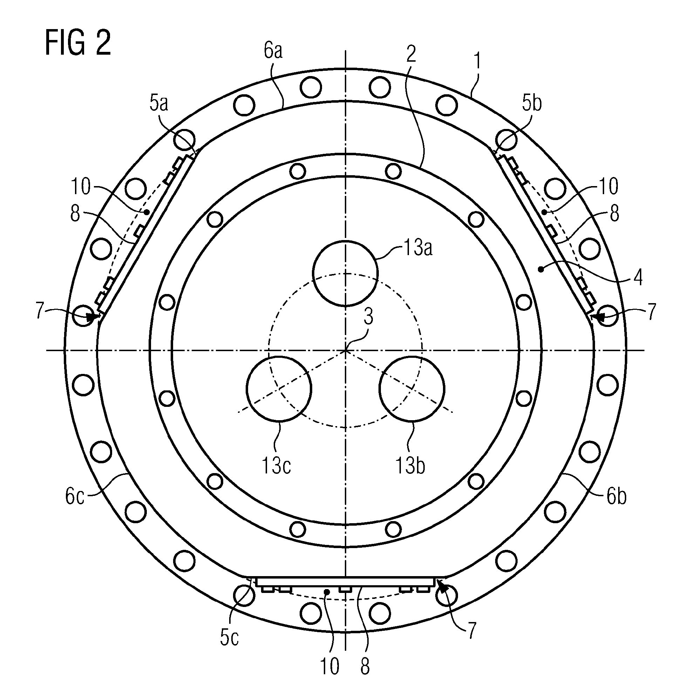

Die Figur 2 zeigt eine stirnseitige Draufsicht auf das Kapselungsgehäusereduzierstück gemäß Figur 1. Dabei verläuft die Sichtachse längs der Längsachse 3, wobei aus Richtung des zweiten Flansches 2 in Richtung des ersten Flansches 1 geblickt wird. Die Längsachse 3 ragt lotrecht aus der Zeichenebene der Figur 2 heraus. Zu erkenne ist, dass sowohl der erste als auch der zweite Flansch 1, 2 koaxial zur Längsachse 3 angeordnet sind, wobei der Flanschdurchmesser des ersten Flansches 1 größer ist als der Flanschdurchmesser des zweiten Flansches 2. Zwischen den beiden Flanschen 1, 2 erstreckt sich der Kapselungsgehäusemantel 4 mit einer ersten ebenen Zone 5a, einer zweiten ebenen Zone 5b sowie einer dritten ebenen Zone 5c. In der Draufsicht sind jeweils die sich anschließenden Kreisabschnitte 10 an den ebenen Zonen 5a, 5b, 5c zu erkennen. Beispielhaft sind in der Figur 2 sämtliche in den ebenen Zonen 5a, 5b, 5c befindlichen Flanschöffnungen 7 mit einem Blindflanschdeckel 8 verschlossen. Die ebenen Zonen 5a, 5b, 5c sind in Umlaufrichtung über die rotationssymmetrischen Mantelflächenabschnitte 6a, 6b, 6c des Kapselungsgehäusemantels miteinander verbunden. Zu erkennen ist eine koaxiale Ausrichtung der rotationssymmetrischen Mantelflächenabschnitte 6a, 6b, 6c bezüglich des ersten Flansches 1 sowie des zweiten Flansches 2. Zu erkennen ist, dass die rotationssymmetrischen Mantelflächenabschnitte 6a, 6b, 6c Abschnitte einer (gedachten) durchgängigen rotationssymmetrischen Mantelfläche des Kapselungsgehäusemantels sind. Die ebenen Zonen 5a, 5b, 5c sind durch Abplattungen in dieser rotationssymmetrische Mantelfläche gebildet. Somit sind die Biegekanten 9 Sehnen von in der Projektion gemäß Figur 2 dargestellten Kreisabschnitten 10.

In der Figur 2 ist weiterhin symbolisch die Lage von im Innern des Kapselungsgehäusereduzierstückes zu positionierenden Aktivleitern 13a, 13b, 13c gezeigt. Aus Gründen der Übersicht sind in der Figur 2 die Aktivleiter 13a, 13b, 13c lediglich ausschnittsweise in der Ebene dargestellt, in welcher sie den zweiten Flansch 2 durchstoßen. Die Aktivleiter 13a, 13b, 13c sind auf einer Kreisbahn verteilt angeordnet, wobei diese jeweils die Eckpunkte eines gleichseitigen Dreieckes auf der Kreisbahn festlegen.

Die Aktivleiter 13a, 13b, 13c sind gegenüber dem Kapselungsgehäusereduzierstück elektrisch isoliert angeordnet. Zur Abstützung der Aktivleiter 13a, 13b, 13c können Feststoffisolatoren vorgesehen sein, welche sich beispielsweise an den Flanschen 1, 2 oder an weiteren Wandungen des Kapselungsgehäusereduzierstückes abstützen. Das Kapselungsgehäusereduzierstück stellt einen Kapselungsgehäusemantel 4 zwischen den beiden Flanschen 1, 2 zur Verfügung, welcher fluiddicht ist. Über ein Verflanschen der Flansche 1, 2 mit weiteren Baugruppen kann auch dort ein fluiddichter Abschluss hergestellt werden. So kann das Innere des Kapselungsgehäusereduzierstückes mit einem elektrisch isolierenden Fluid, vorzugsweise einem Isoliergas oder einem Isolieröl befüllt werden. Als Isoliergas eignen sich insbesondere Schwefelhexafluorid oder Stickstoff oder andere geeignete Isoliergase. Das Fluid kann im Innern unter einen erhöhten Druck gesetzt werden, wodurch im Regelfall die elektrische Festigkeit des Fluids zusätzlich verbessert wird.

Die Aktivleiter 13a, 13b, 13c sind Teil eines mehrphasigen Elektroenergieübertragungssystemes. Dabei sind die Aktivleiter 13a, 13b, 13c zur Leitung jeweils eines elektrischen Stromes vorgesehen, wobei die Ströme in den einzelnen Aktivleitern 13a, 13b, 13c nach Phasenlage und Betrag voneinander verschieden sein können.

Um die durch die Aktivleiter 13a, 13b, 13c fließenden Ströme erfassen zu können, ist das Innere des Kapselungsgehäusereduzierstückes vorzugsweise mit einer Stromwandleranordnung bestückt.

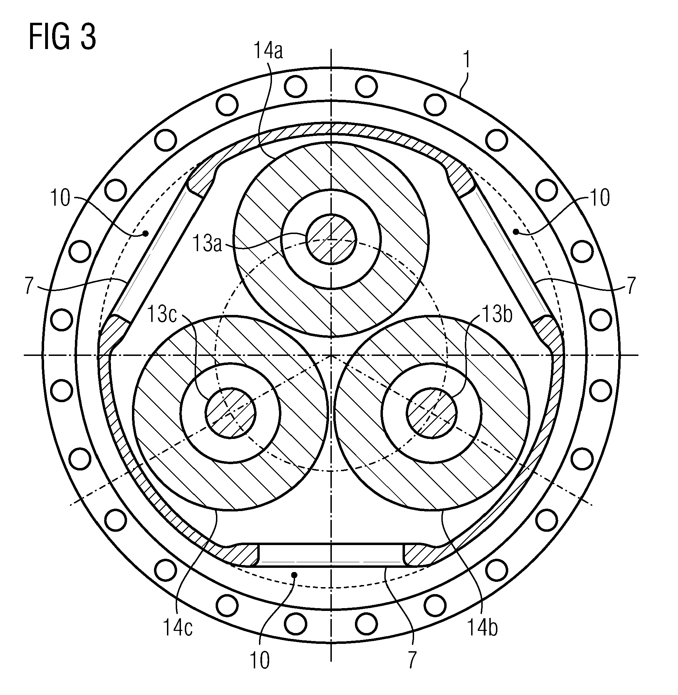

In der Figur 3 ist ein Schnitt durch das aus den Figuren 1 und 2 bekannte Kapselungsgehäusereduzierstück gezeigt. Dabei ist die Schnittebene derartig gewählt, dass die in den ebenen Zonen 5a, 5b, 5c befindlichen Flanschöffnungen 7 geschnitten sind. In der Figur 3 ist dieselbe Sichtachse wie aus der Figur 2 bekannt verwandt. Zu erkennen ist, dass ein Abschnitt des Kapselungsgehäusereduzierstückes einen im Wesentlichen dreieckigen Querschnitt aufweist, welcher an den Dreiecksspitzen durch die rotationssymmetrischen Mantelflächenabschnitte 6a, 6b, 6c gebrochen ist. Aus Stabilitätsgründen sind die idealen Dreiecksseiten von Verstärkungen durchsetzt. In diesen Verstärkungen ist es möglich, beispielsweise sacklochartige Gewindebohrungen einzubringen, mittels welcher die Flanschöffnungen 7 verschließende Blindflanschdeckel 8 (in Figur 3 nicht dargestellt) oder andere Verschlusselemente fluiddicht mit dem Kapselungsgehäusereduzierstück verbindbar sind.

Gegenüber der aus der Figur 2 bekannten Ansicht ist ein Verspringen der Aktivleiter 13a, 13b, 13c auf einen durchmessergrößeren Kreis erkennbar. Weiterhin sind die Aktivleiter 13a, 13b, 13c jeweils von Wandlerkernen 14a, 14b, 14c umgeben. Die Wandlerkerne 14a, 14b, 14c sind beispielsweise aus einem ferromagnetischem Material geformt und weisen eine hohlzylindrische Struktur auf. Mittels der Wandlerkerne 14a, 14b, 14c können die Aktivleiter 13a, 13b, 13c während eines Stromflusses umgebende Felder gebündelt werden. Die Wandlerkerne 14a, 14b, 14c können dabei in verschiedenartigen Formgebungen gestaltet sein. So kann beispielsweise vorgesehen sein, dass längs des Verlaufes der Aktivleiter 13a, 13b, 13c auf jedem der Aktivleiter 13a, 13b, 13c jeweils mehrere Wandlerkerne 14a, 14b, 14c; 14a', 14b', 14c'; 14a", 14b", 14c" aufgezogen sind.

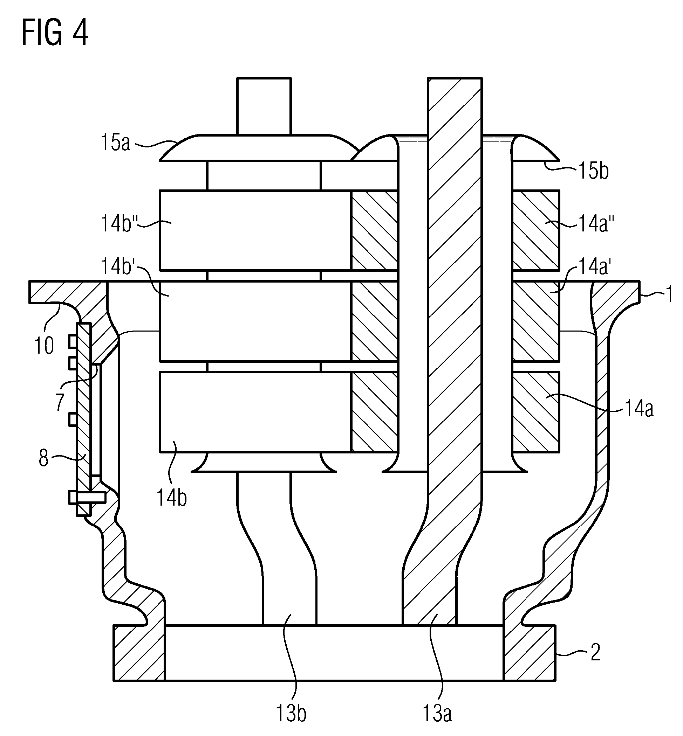

In der Figur 4 ist ein Querschnitt durch das aus den Figuren 1, 2 und 3 bekannte Kapselungsgehäusereduzierstück dargestellt.

Zwischen den Aktivleitern 13a, 13b, 13c und den Wandlerkernen 14a, 14a', 14a", 14b, 14b', 14b" sind jeweils dielektrische Schirmelemente 15a, 15b angeordnet. Zu erkennen ist in der Figur 4 der gekröpfte Verlauf der Aktivleiter 13a, 13b, 13c, wobei aufgrund der Lage der Schnittebene einer der Aktivleiter 13c nicht unmittelbar erkenntlich ist.

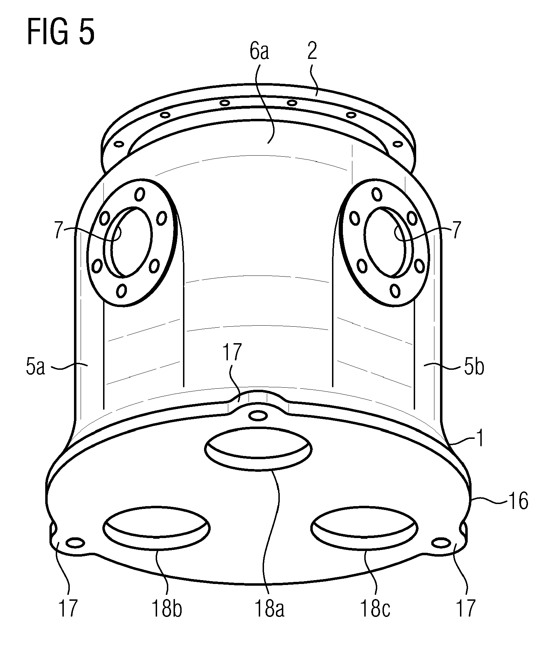

In der Figur 5 ist das aus den Figuren 1, 2, 3, 4 bekannte Kapselungsgehäusereduzierstück in einer perspektivischen Ansicht gezeigt. Dabei ist das Kapselungsgehäusereduzierstück gemäß Figur 5 noch nicht vollständig komplettiert, d. h. die Flanschöffnungen 7 in den ebenen Zonen 5a, 5b, 5c sind frei von jeglicher Überdeckung. Zu erkennen sind die kreisringförmigen Flanschringe, welche die Flanschöffnungen 7 umgeben.

An dem ersten Flansch 1 ist ein Deckel 16 angeflanscht. Der Deckel 16 ist im Wesentlichen kreisförmig ausgestaltet, wobei der Durchmesser des Deckels 16 dem äußeren Durchmesser des ersten Flansches 1 entspricht. Am Umfang des Deckels 16 sind radiale Anformungen 17 vorgesehen, welche den ersten Flansch 1 überragen. Die Anzahl der Anformungen 17 entspricht dabei der Anzahl der rotationssymmetrischen Mantelflächenabschnitte 6a, 6b, 6c. Der Deckel 16 ist mit dem ersten Flansch winkelstarr und fluiddicht verflanscht. In den Anformungen 17 sind durchgreifende Ausnehmungen eingebracht, über welche der Deckel 16 nebst angeflanschtem Kapselungsgehäusereduzierstück gehalten werden kann. Dazu kann beispielsweise vorgesehen sein, dass die Anformungen 17 mit einem Fundament, einem Traggestell o. ä. winkelstarr verbunden sind.

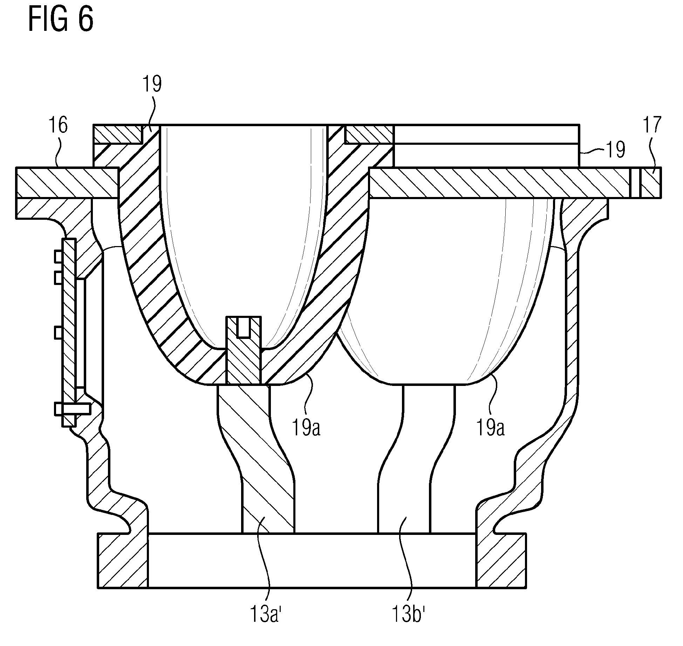

Weiterhin ist in dem Deckel 16 die Anordnungen von drei Öffnungen 18a, 18b, 18c vorgesehen. Die drei Öffnungen 18a, 18b, 18c entsprechen ihrer Anzahl der Anzahl der ebenen Zonen 5a, 5b, 5c sowie der Anzahl der rotationssymmetrischen Mantelflächenabschnitte 6a, 6b, 6c. Die Öffnungen 18a, 18b, 18c können vorgesehen sein, um Kabeldurchführungen 19 fluiddicht mit dem Deckel 16 zu verbinden, so dass die Öffnungen 18a, 18b, 18c fluiddicht verschlossen sind (Fig. 6). Über die Kabeldurchführungen 19 können im Innern des Kapselungsgehäusereduzierstückes bzw. anderer Kapselungsgehäusebaugruppen befindliche Aktivleiter 13'a, 13'b elektrisch leitend mit außerhalb des Kapselungsgehäusereduzierstückes befindlichen elektrischen Leitern verbunden werden. Diese elektrischen Leiter werden über Kabel, welche in den Kabeldurchführungen enden, bis in das Innere des Kapselungsgehäusereduzierstückes hineingeleitet. Dabei ist besonders vorteilhaft, wenn die Kabeldurchführung in Form von Kabelsteckern ausgestaltet ist, d. h. die Öffnungen 18a, 18b, 18c sind durch Kabelbuchsen 19a verschlossen, wobei die Kabelbuchsen 19a Teil einer fluiddichten Wandung des Kapselungsgehäusereduzierstückes sind. Dazu weisen die Kabelbuchsen 19a elektrisch isolierte Abschnitte auf.

Das in den Figuren 5, 6 gezeigte Kapselungsgehäusereduzierstück weist eine gegenüber dem in den Figuren 1, 2, 3, 4 gezeigten Kapselungsgehäusereduzierstückes leicht abgewandelte Formgebung auf. Das zu den Figuren 1 bis 4 Ausgesagte ist jedoch auch analog auf das in den Figuren 5, 6 dargestellte Kapselungsgehäuse anzuwenden. Umgekehrt ist das bezüglich der Figuren 5, 6 Ausgesagte auch auf das Kapselungsgehäusereduzierstück gemäß den Figuren 1 bis 4 zutreffend.

## Patentansprüche

1. Kapselungsgehäusereduzierstück mit einem ersten Flansch (1) und einem gegenüber dem ersten Flansch (1) querschnittreduzierten zweiten Flansch (2), zwischen welchen sich ein Kapselungsgehäusemantel (4) erstreckt, wobei
in dem Kapselungsgehäusemantel (4) mehrere ebene Zonen (5a, 5b, 5c) angeordnet sind, zwischen welchen Mantelflächenabschnitte (6a, 6b, 6c) rotationssymmetrisch angeordnet sind, **dadurch gekennzeichnet, dass**
die Zonen (5a, 5b, 5c) durch Abplattungen eines Kreiszylindermantels gebildet sind.

2. Kapselungsgehäusereduzierstück nach Anspruch 1,
**dadurch gekennzeichnet, dass**
zumindest eine ebene Zone (5a, 5b, 5c) über eine Biegekante (9) in einen Kreisabschnitt (10) übergeht, welcher mit dem ersten Flansch (1) verbunden ist.

3. Kapselungsgehäusereduzierstück nach Anspruch 1 oder 2,
**dadurch gekennzeichnet, dass**
die Zonen (5a, 5b, 5c) symmetrisch im Umlauf der Mantelflächenabschnitte (6a, 6b, 6c) verteilt sind.

4. Kapselungsgehäusereduzierstück nach einem der Ansprüche 1 bis 3,
**dadurch gekennzeichnet, dass**
die Zonen (5a, 5b, 5c) als vertiefte Einprägungen in einen Kreiszylindermantelabschnitt eingeformt sind.

5. Kapselungsgehäusereduzierstück nach einem der Ansprüche 1 bis 3,
**dadurch gekennzeichnet, dass**
die Zonen (5a, 5b, 5c) durch Erhebungen an einen Kreiszylindermantelabschnitt angeformt sind.

6. Kapselungsgehäusereduzierstück nach einem der Ansprüche 1 bis 5,
**dadurch gekennzeichnet, dass**
in zumindest einer der Zonen (5a, 5b, 5c) eine Flanschöffnung (7) angeordnet ist.

7. Kapselungsgehäusereduzierstück nach Anspruch 6,
**dadurch gekennzeichnet, dass**
die Flanschöffnung (7) von einer Überdrucksicherungseinrichtung verschlossen ist.

8. Kapselungsgehäusereduzierstück nach Anspruch 6,
**dadurch gekennzeichnet, dass**
die Flanschöffnung (7) von einer Messleitungsdurchführung verschlossen ist.

9. Kapselungsgehäusereduzierstück nach Anspruch 6,
**dadurch gekennzeichnet, dass**
die Flanschöffnung (7) mit einem Filterdeckel verschlossen ist.

10. Kapselungsgehäusereduzierstück nach einem der Ansprüche 1 bis 9,
**dadurch gekennzeichnet, dass**
zwei gleichartige Kapselungsgehäusereduzierstücke mit ihren ersten Flanschen (1) miteinander verflanscht sind und gemeinsam einen Fluidraum begrenzen.

11. Kapselungsgehäusereduzierstück nach einem der Ansprüche 1 bis 9,
**dadurch gekennzeichnet, dass**
der erste Flansch (1) eines Kapselungsgehäusereduzierstückes von einem Deckel (16) verschlossen ist, welcher an seinem Umfang mehrere den ersten Flansch (1) radial überragende Anformungen (17) aufweist, an welchen das Kapselungsgehäusereduzierstück abgestützt ist.

12. Kapselungsgehäusereduzierstück nach Anspruch 11,
**dadurch gekennzeichnet, dass**
der Deckel (16) von Kabeldurchführungen durchsetzt ist.

## Claims

1. Encapsulation housing reducing piece having a first flange (1) and a second flange (2) whose cross section is smaller than that of the first flange (1) and between which an encapsulation housing casing (4) extends, wherein
a plurality of planar zones (5a, 5b, 5c) are arranged in the encapsulation housing casing (4), between which casing surface sections (6a, 6b, 6c) are arranged rotationally symmetrically,
**characterized in that**
the zones (5a, 5b, 5c) are formed by flats on a circular cylindrical casing.

2. Encapsulation housing reducing piece according to Claim 1,
**characterized in that**
at least one planar zone (5a, 5b, 5c) merges via a bending edge (9) into a circular section (10) which is connected to the first flange (1).

3. Encapsulation housing reducing piece according to Claim 1 or 2,
**characterized in that**
the zones (5a, 5b, 5c) are distributed symmetrically in the circumference of the casing surface sections (6a, 6b, 6c).

4. Encapsulation housing reducing piece according to one of Claims 1 to 3,
**characterized in that**
the zones (5a, 5b, 5c) are formed as depressed indentations into a circular cylindrical casing section.

5. Encapsulation housing reducing piece according to one of Claims 1 to 3,
**characterized in that**
the zones (5a, 5b, 5c) are formed by projections on a circular cylindrical casing section.

6. Encapsulation housing reducing piece according to one of Claims 1 to 5,
**characterized in that**
a flange opening (7) is arranged in at least one of the zones (5a, 5b, 5c).

7. Encapsulation housing reducing piece according to Claim 6,
**characterized in that**
the flange opening (7) is closed by an overpressure protection device.

8. Encapsulation housing reducing piece according to Claim 6,
**characterized in that**
the flange opening (7) is closed by a measurement line bushing.

9. Encapsulation housing reducing piece according to Claim 6,
**characterized in that**
the flange opening (7) is closed with a filter cover.

10. Encapsulation housing reducing piece according to one of Claims 1 to 9,
**characterized in that**
two encapsulation housing reducing pieces of the same type are flange-connected to one another by their first flanges (1) and jointly bound a fluid area.

11. Encapsulation housing reducing piece according to one of Claims 1 to 9,
**characterized in that**
the first flange (1) of an encapsulation housing reducing piece is closed by a cover (16) which has a plurality of attachments (17) on its circumference, which attachments (17) radially overhang the first flange (1), and the encapsulation housing reducing piece is supported on them.

12. Encapsulation housing reducing piece according to Claim 11,
**characterized in that**
cable bushings pass through the cover (16).

## Revendications

1. Raccord réducteur de boîtier de blindage, comprenant une première bride (1) et une deuxième bride (2) de section transversale réduite par rapport à la première bride (1), brides entre lesquelles s'étend une enveloppe (4) de boîtier de blindage, dans lequel
dans l'enveloppe (4) du boîtier de blindage, sont disposées plusieurs zones (5a, 5b, 5c) planes, entre lesquelles sont disposées, à symétrie de révolution, des parties (6a, 6b, 6c) de surface d'enveloppe,
**caractérisé en ce que**
les zones (5a, 5b, 5c) sont formées par des méplats d'une enveloppe cylindrique de section circulaire.

2. Raccord réducteur de boîtier de blindage suivant la revendication 1,
**caractérisé en ce que**
au moins une zone (5a, 5b, 5c) plane se transforme, par un bord (9) coudé, en un segment (10) de cercle, lequel est relié à la première bride (1).

3. Raccord réducteur de boîtier de blindage suivant la revendication 1 ou 2,
**caractérisé en ce que**
les zones (5a, 5b, 5c) sont réparties symétriquement sur le pourtour des parties (6a, 6b, 6c) de surface d'enveloppe.

4. Raccord réducteur de boîtier de blindage suivant l'une des revendications 1 à 3,
**caractérisé en ce que**
les zones (5a, 5b, 5c) sont sous la forme d'empreintes enfoncées dans une partie d'enveloppe cylindrique de section circulaire.

5. Raccord réducteur de boîtier de blindage suivant l'une des revendications 1 à 3,
**caractérisé en ce que**
les zones (5a, 5b, 5c) sont formées par des surélévations sur une partie d'enveloppe cylindrique de section circulaire.

6. Raccord réducteur de boîtier de blindage suivant l'une des revendications 1 à 5,
**caractérisé en ce que**
une ouverture (7) de bride est disposée dans au moins l'une des zones (5a, 5b, 5c).

7. Raccord réducteur de boîtier de blindage suivant la revendication 6,
**caractérisé en ce que**
l'ouverture (7) de bride est fermée par un dispositif de sécurisation vis-à-vis d'une surpression.

8. Raccord réducteur de boîtier de blindage suivant la revendication 6,
**caractérisé en ce que**
l'ouverture (7) de bride est fermée par une traversée de ligne de mesure.

9. Raccord réducteur de boîtier de blindage suivant la revendication 6,
**caractérisé en ce que**
l'ouverture (7) de bride est fermée par un couvercle de filtre.

10. Raccord réducteur de boîtier de blindage suivant l'une des revendications 1 à 9,
**caractérisé en ce que**
deux raccords réducteurs de boîtier de blindage de même type sont bridés l'un à l'autre par leur première bride (1) et délimitent ensemble un espace pour du fluide.

11. Raccord réducteur de boîtier de blindage suivant l'une des revendications 1 à 9,
**caractérisé en ce que**
la première bride (1) d'un raccord réducteur de boîtier de blindage est fermée par un couvercle (16), lequel a, sur son pourtour, plusieurs conformations (17, qui dépassent radialement de la première bride (1) et sur lesquelles s'appuie le raccord réducteur de boîtier de blindage.

12. Raccord réducteur de boîtier de blindage suivant la revendication 11,
**caractérisé en ce que**
le couvercle (16) est traversé par des traversées pour un câble.
